# EUROPEAN PATENT SPECIFICATION

(11) **EP 3 044 008 B1**
(45) Date of publication and mention of the grant of the patent: **26.07.2023**
(21) Application number: 14783790.0
(22) Date of filing: 03.10.2014
(51) Int. Cl.: B41J 29/00, G05D 23/19, B29C 35/02, B33Y 50/02, B33Y 30/00, B33Y 10/00, B29C 64/165, B29C 64/393, G05D 23/27

(54) **METHOD AND APPARATUS FOR CONTROLLING HEATING OF A SURFACE OF A LAYER OF BUILD MATERIAL IN ADDITIVE MANUFACTURING OF AN OBJECT**
VERFAHREN UND VORRICHTUNG ZUR STEUERUNG DER HEIZUNG EINER OBERFLÄCHE EINER SCHICHT AUS BAUMATERIAL BEI DER ADDITIVEN HERSTELLUNG EINES OBJEKTS
PROCÉDÉ ET DISPOSITIF POUR CONTRÔLER LE CHAUFFAGE D'UNE SURFACE D'UNE COUCHE DE MATÉRIAU DE CONSTRUCTION DANS LA FABRICATION ADDITIVE D'UN OBJET

(43) Date of publication of application: 20.07.2016
(73) Proprietor: Hewlett-Packard Development Company, L.P., Spring TX 77389 (US)
(72) Inventor: CORTES I HERMS, Sebastia, 08174 San Cugat del Valles (ES); VILAJOSANA GUILLEN, Xavier, 08174 Sant Cugat des Valles (ES); ROSSOW SETHNE, Yngvar, 08174 San Cugat del Valles (ES)
(74) Representative: Haseltine Lake Kempner LLP
(86) International application number: PCT/EP2014/071240
(87) International publication number: WO 2016/050319

(56) References cited:
- EP-A1- 3 094 472
- WO-A1-92/08566
- WO-A1-99/47901

## Description

### BACKGROUND

In heating a surface, for example, in constructing an object, for example, in additive manufacturing which generates a 3-D object on a layer-by-layer basis or, in heating portions of a surface of an object for the purposes of altering properties of portions of the object, the heating process affects the quality of the finished object.
WO9947901 discloses a system and apparatus for determining and controlling the temperature of a substrate such as a semiconductor substrate or wafer. Temperature corrections for a localised region of a substrate may be corrected by an emissivity correction factor. WO 92/08566 discloses a selective laser sintering apparatus with radiant heating.

### SUMMARY OF THE INVENTION

The invention is set out in the appended claims.

### BRIEF DESCRIPTION OF DRAWINGS

For a more complete understanding, reference is now made to the following description taken in conjunction with the accompanying drawings in which:
Figure 1 is a flowchart of an example of part of a method of controlling heating of a surface; and
Figure 2 is a flowchart of a further example of a method of controlling heating of a surface;
Figure 3 is a simplified schematic of an example of apparatus for controlling heating of a surface; and
Figure 4 is an example of surfaces of objects to be heated by the method of the example of Figure 1.

### DETAILED DESCRIPTION

In heating a surface in constructing a 3-D object by additive manufacturing which generates the 3-D object on a layer-by-layer basis, or in heating a surface of an object having portions treated with an appropriate agent for the purposes of altering the properties of the portions of the object, a stable and homogeneous temperature distribution across the surface being heated achieves the quality of the build or the property of a portion of an object.

For example, in additive manufacturing in which a 3-D object is generated by solidification of a build material on a layer-by-layer basis, the quality of the final object may be dependent, at least in part, on the temperature distribution across each layer. Maintenance of a stable and homogeneous temperature distribution improves the quality and accuracy of the generated 3-D object.

There are many different techniques for performing additive manufacturing of a 3-D object, for example sintering. In this example of additive manufacturing, the 3-D object is generated by adding successive layers of a build material. The build material may be formed of liquid, powder, or sheet material. An agent is distributed over the surface of each layer of the build material. The pattern formed by the distributed agent defines a corresponding slice of the 3-D object being generated. Energy is applied to each layer of the build material. This causes the build material which is coated by the agent to heat up more than portions on which no agent is applied. As a result, the regions coated by the agent coalesce and solidify upon cooling to form the slice of the 3-D object. The system relies on the ability of the temperature generated by heating the surface of the upper layer of build material or, at least, into a portion of the upper layer or layers (e.g. 50mm into the surface) of the build material to be accurately controlled to achieve the quality of the 3-D object. The main challenge is to reach a homogeneous and stable temperature distribution over the entire surface of the upper layer (or layers) of the build material regardless of its position and/or whether there are agents or melt material on it.

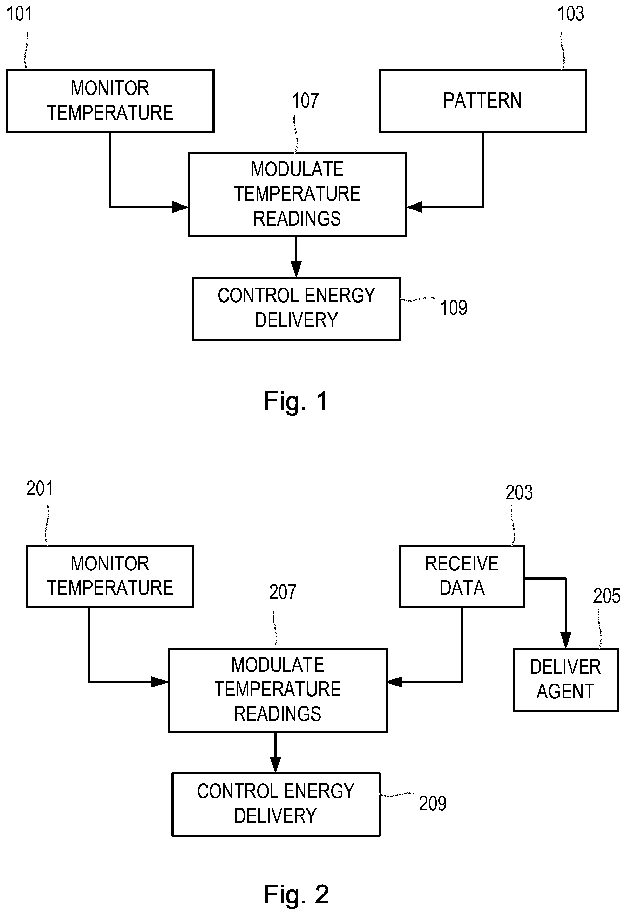

With reference to Figure 1, an example of a method of controlling heating of a surface is illustrated. This is described with reference to the example above of additive manufacturing using a sintering system. However, it can be appreciated that this is for illustrative purposes and that the method and apparatus described below is equally applicable to other additive manufacturing processes.

The temperature of a plurality of zones of a surface is monitored, 101 to output at least one temperature reading for each of the plurality of zones. A pattern arranged across at least a portion of the plurality of zones is input (provided), 103, or at least made available for the subsequent process in the example of Figure 1. The pattern comprises the pattern to be formed on a surface of a current layer of the build material, or a pattern formed on a surface of at least one previous layer of the build material, or a combination of the pattern to be formed on the surface of a current layer and the pattern formed on a surface of at least one previous layer of the build material. The pattern may be provided in the form of data which represents a predefined pattern as described in more detail with reference to Figure 2, below. In another example, the pattern may be in the form of data which represents a predefined pattern to be formed on the surface of a current layer or the pattern may be in the form of data which represents a predefined pattern that has been formed on the surface of at least one previous layer, or the pattern may be in the form of data which represents a predefined pattern to be formed on the surface of the current layer of build material in combination with data which represents a predefined pattern which has been formed on the surface of at least one previous layer of build material. In yet another example, the pattern may be provided by the actual pattern formed on the surface of at least one previous layer. In yet another example, the pattern may be provided by a combination of a pattern in the form of data which represents a predefined pattern to be formed on the surface of a current layer in combination with the actual pattern formed on the surface of at least one previous layer of build material. The actual pattern formed on the surface of at least one previous layer may be provided by an image captured by at least one high resolution image capturing device, such as, for example a thermal imaging camera or scanner and that the image captured by the device provides information of the pattern formed on the surface of at least one previous layer.

The temperature readings are modulated in response to a pattern arranged across the plurality of zones. The temperature readings may be modulated by filtering, smoothing or adjusting the temperature readings. In one example, the pattern is arranged such that a pattern is formed across at least a portion of the plurality of zones by the selective delivery of an agent to the surface of an upper layer of a build material. When energy is applied to the surface of the build material, the build material is heated. The increased emissivity temperature of the portions of the surface of the build material which are covered with the agent causes these portions to heat up to a greater temperature than those portions of the surface not covered with an agent. The greater temperature of the portions covered with the agent is compensated by modulating the temperature readings of these portions of the surface of the build material.

The temperature readings may be modulated in response to the pattern already formed, that is, to take into account the pattern formed on the surface of the current layer of build material, that is, in one example, to take into account variations in the pattern caused by delivery of the agent(s) due to the effect of the agent(s) emissivity, or already sintered parts within previously formed layers, or a combination of both.

The energy delivered to each of the plurality of zones is then controlled, 109, based on the modulated temperature readings to maintain a substantially homogeneous temperature distribution across the plurality of zones. This may be achieved by comparing the temperature readings with a threshold or target temperature for each of the plurality of zones or, if modulated, comparing the modulated temperature readings with the threshold or target temperature for each zone. If a temperature reading for a particular zone is below the threshold or target temperature, the energy delivered to that particular zone is increased to elevate the temperature within a predetermined range of the threshold target temperature, for example within a range of + 1°C. Further, if the temperature reading for a particular zone is above the threshold or target temperature, the energy delivered to that particular zone is reduced to lower the temperature to the threshold or target temperature or at least within a predetermined range of the threshold or target temperature.

If it is established, in response to the pattern arranged across the plurality of zones that it covers all or a part of a particular zone, the at least one temperature reading of that particular zone is modulated, 107, by, for example, reducing the temperature reading by a predetermined amount based on, for example, the type of build material of the 3-D object, the type of agent(s) deposited on the build material and the amount of agent deposited. The modulated temperature reading is then compared with the threshold or target temperature. If the modulated temperature reading for a particular zone is below the threshold or target temperature, the energy delivered to that particular zone is increased to elevate the temperature within a predetermined range of the threshold target temperature. Further, if the modulated temperature reading is above the threshold or target temperature, the energy delivered to that particular zone is reduced to lower the temperature within the predetermined range of the threshold or target temperature.

As illustrated in Figure 2, a further example of a method of controlling heating of the surface of an upper layer of build material is illustrated. The temperature of a plurality of zones of a surface is monitored, 201 and at least one temperature reading for each zone is output. Data representing a predefined pattern, for example, data representing a portion (e.g. slice) of a 3-D object is received, 203. An agent, for example, a coalescing agent, a coalescence modifier agent or a combination thereof is selectively delivered, 205 onto portions of the surface to form the predefined pattern across the plurality of zones in accordance with control data derived from the received data. The predefined pattern defines the areas of the build material that are to be coalesced and solidified to form an individual slice of a 3-D object being generated. The temperature readings are modulated, 207, in response to the received data, that is, according to the predefined pattern. For example, the increased emissivity temperature of the portions of the surface of build material which are covered with the agent is compensated by modulating the temperature readings of that portion of the surface. The energy delivered to each of the plurality of zones is then controlled, 109, based on the modulated temperature readings to maintain a substantially homogeneous temperature distribution across the surface, as described above with reference to Figure 1.

The apparatus for controlling heating of a surface comprises at least one sensor to monitor the temperature of a plurality of zones of a surface to output at least one temperature reading for each of the plurality of zones. It further comprises a temperature controller to modulate the temperature readings in response to a pattern arranged across a portion of the plurality of zones and to control the energy delivered to each of the plurality of zones based on the modulated temperature to maintain a substantially homogeneous temperature distribution across the surface.

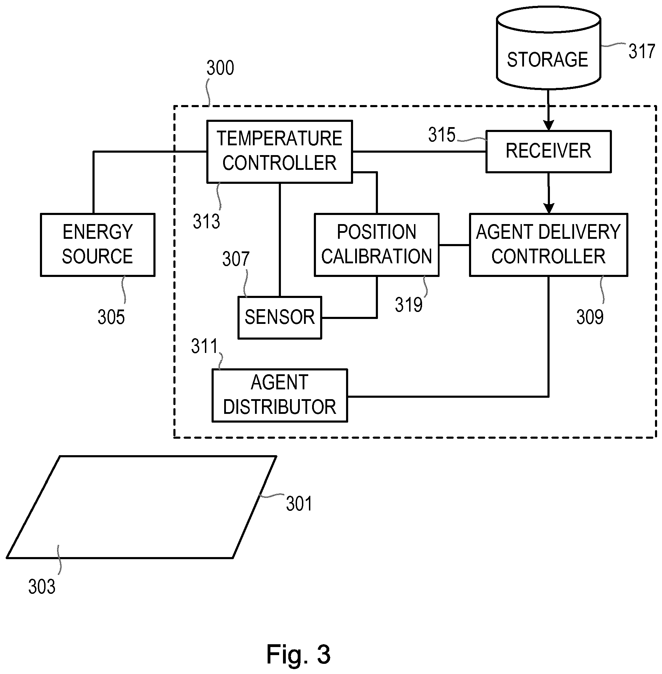

With reference to Figure 3, an example of apparatus 300 for controlling heating of the surface 303 (e.g. the surface of an upper layer of build material) is shown. The build material is deposited across a processing bed 301. The processing bed 301 (and hence the surface of the deposited build material) is divided into a plurality of zones. The surface 303 is heated by an energy source 305. The energy source 305 may comprise an energy source which scans over the surface of the build material of each layer in x and y (orthogonal) directions or, alternatively, it may comprise a plurality of energy sources arranged inline completely across 1 dimension of the surface 303, say x-dimension, and scans in a y-direction across the surface 303 or, alternatively, it may comprise a plurality of energy sources arranged inline across a portion of 1 dimension of the surface 303, a portion of the x-dimension and scans in x- and y-directions across the whole surface or, alternatively, it may comprise a 2-D array of energy sources which scans over the surface 303 in x and y directions.

The apparatus 300 further comprises at least one sensor 307. The at least one sensor 307 may comprise an IR sensor, thermal imaging camera, a scanner, an IR sensor array, thermocouple sensor or the like. The at least one sensor 307 may comprise a single sensor or an array of sensors that scan over the surface 303 to monitor the temperature of each of the plurality of zones of the surface 303. In another example, the at least one sensor 307 may comprises a plurality of single sensors or a plurality of sensor arrays. Each single sensor or sensor array may be at a fixed position and arranged to monitor the temperature of a particular zone.

The apparatus 300 further comprises an agent delivery controller 309 to control selective delivery of an agent onto portions of the surface 303 to form a pattern across the plurality of zones. The agent may be delivered via an agent distributor 311. The agent may be in the form of a fluid and the agent distributor 311 may comprise an array of nozzles for ejecting drops of the agent fluid onto the surface 303. The array of nozzles scans over the surface 303 under the control of the agent delivery controller 309. In some examples, the agent distributor 311 may be an integral part of the apparatus 300. In some examples, the agent distributors 311 may be user replaceable, in which case they may be removably insertable into suitable agent distributor receivers or interfaces (not shown here). The agent distributor 311 may be mounted so that it scans bidirectionally along an axis, for example, the x-axis across the surface 303 of build material (where the surface 303 of build material is defined in an x-y plane and the layers are built in a z-direction, x, y and z being orthogonal to each other). The processing bed 301 may be moved along a y-axis so that the agent distributor 311 deposits drops of agent fluid on any part of the surface of the build material. The agent distributor 311 may be able to deliver the agent fluid either when the agent distributor is moving in one of the forward and rearward direction of the x-axis or when moving in both the forward and rearward directions or a combination thereof.

The agent may comprise, for example, a coalescing agent which is selectively delivered to a first set of selectable portions onto the surface 303 to form at least a part of the pattern. In addition or alternatively, the agent may comprise a coalescence modifier agent which is selectively delivered onto a second set of portions of the surface 303 to form a second pattern across the plurality of zones to form at least a part of the pattern. The coalescing agent is used to enable coalescence and solidification of the first set of portions of the build material. The coalescence modifier agent is used to alter the properties of the material of the second set of portions of the build material. The coalescence modifier may be used in conjunction with the coalescing agent such that the properties are modified as the build material of the object is coalesced and solidified. Alternatively, a modifier agent (for example an appropriate agent) may be distributed to alter properties of portions of the object when subjected to heat.

The apparatus 300 further comprises a temperature controller 313 to modulate the temperature readings in response to the pattern arranged across the plurality of zones and to control the energy delivered by the energy source 305 to each of the plurality of zones to maintain a substantially homogeneous temperature distribution across the plurality of zones as described in more detail above with reference to Figure 1.

In one example, the temperature controller 313 may comprise a Proportional-Integral-Derivative (PID) control loop. In addition to modulating the temperature in response to the pattern, the temperature readings may also be modulated to take into account historical errors and variations in these errors over time. This enables any errors which may occur in the pattern when it is formed, for example, errors caused by spitting or blockages of the agent distributor 311 to be compensated for.

In another example, the temperature controller 313 controls the energy delivered to a first zone by comparing the temperature readings, once modulated, for the first zone with a predetermined threshold or target temperature. In another example, the temperature controller 313 controls the energy delivered to a first zone by comparing the temperature readings of the first zone, once modulated, and the temperature readings of at least one neighbouring zone for the first zone with a predetermined threshold or target temperature. The temperature readings of the at least one neighbouring zones may be weighted and combined to provide a temperature reading for the first zone that is modulated in response to the pattern and further modulated by the weighted temperature readings of at least one neighbouring zone. In another example, the temperature readings of the at least one neighbouring zone may also be further modulated in response to the pattern before being weighted and combined to provide a temperature reading for the first zone.

The apparatus 300 further comprises a receiver 315 to receive data representing a predefined pattern. This data may be stored in a storage device 317 which may be integral with the apparatus 300 (not shown in Figure 3) or may be external thereto, as shown in Figure 3. The storage device 317 may comprise a ROM or RAM or any other suitable storage device. In another example, the receiver 315 may receive sensory outputs which provide measurements or image data of actual pattern or patterns formed across a portion of the plurality of zones. In yet another example, the receiver 315 may receive a combination of the predefined pattern from the storage device 317 and sensory outputs providing measurements of the actual pattern(s) formed. The agent delivery controller 309 processes the received data to generate control data to selectively deliver the agent to form the predefined pattern on the surface 303 of the object.

The selective coalescing and solidifying of portions of the build material of each layer in building each slice of the 3-D object is achieved by the presence of a coalescing agent which has a higher temperature emissivity and therefore is able to reach higher temperatures given the same amount of energy applied, thus, only the agent covered areas are coalesced and solidified. A target temperature is provided by the energy source which is applied to the surface. The target temperature is achieved by a closed loop control system in which at least one sensor 307 monitors the temperature of a plurality of zones across the surface. The temperature readings of the at least one sensor 307 is modulated, 107, by the temperature controller 313 to compensate for the elevated temperatures provided by the areas of the surface covered by an agent as described above with reference to Figure 1.

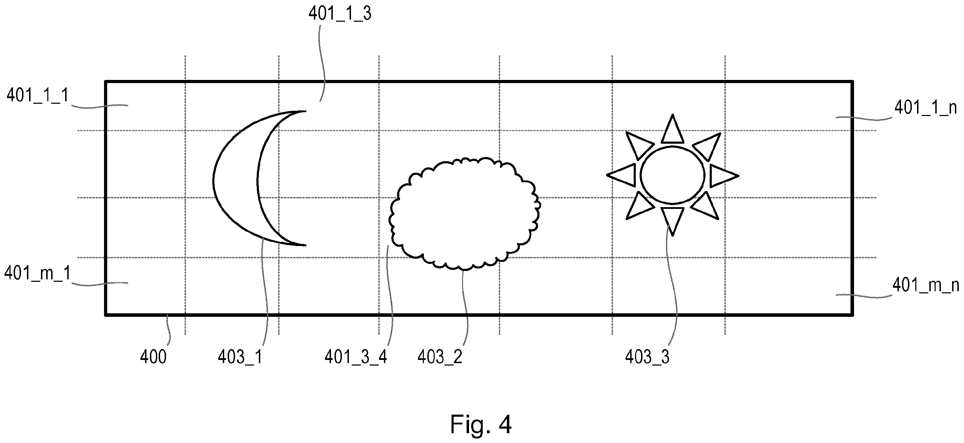

With reference to Figure 4, an example of objects 403_1, 403_2, 403_3 to be heated by the apparatus 300 of Figure 3 is shown. The objects may be 3-D objects being generated layer by layer in which Figure 4 shows the surface of a layer which generates a slice of the 3-D objects. Successive layers of build material are deposited over a processing bed 400, for example, the processing bed 301 of Figure 3. The processing bed 400 is divided into a plurality of zones 401. Each of the plurality of zones may be substantially the same size or may vary in size. The plurality of zones forms an m x n array of zones 401_1_1 to 401_m_n. In the example shown in Figure 4, the first object 403_1 occupies 5 zones. The area of that object that occupies a particular zone is determined as a percentage of the total area of the zone. For example, a first zone 401_1_3 is occupied by a portion of the first object 403_1, say about 4% of the first zone 401_1_3, whereas a portion of the second object 403_2 occupies the majority of the a second zone 401_3_4, say 86% of the second zone 401_3_4. Therefore, in generating a slice of the 3-D object of the first object 403_1, for the slice of the 3-D object shown in Figure 4, it is determined that the first zone 401_1_3 has 4% coverage of a coalescing agent and coalescence modifier agent, for example. In generating a 3-D object of the second object 403_2, for the slice of the 3-D object shown in Figure 4, it is determined that the second zone 401_3_4 has 86% coverage of a coalescing agent and coalescence modifier agent, for example.

The temperature of the first zone 401_1_3 is monitored by at least one sensor and the temperature reading will be slightly elevated which is caused by the higher temperature emissivity of 4% of the surface of the first object 403_1 within the first zone 401_1_3, whereas the second zone 401_3_4, the temperature reading will be elevated by a greater amount than the first zone since the higher temperature emissivity arises from 86% of the surface of the second object 403_2 within the second zone 401_3_4. As a result, a greater adjustment of the temperature readings is made for the second zone 401_3_4 compared with the adjustment made of the temperature readings of the first zone 401_1_3. The amount of the adjustment (modulation) of the temperature readings of a zone may be determined from the percentage area of the pattern within the zone.

As a result optimal energy source control and configuration is achieved. Further, dynamic adjustment of the energy delivered regardless of the objects, agent patterns and processing bed location is achieved. This avoids hot spot areas or false hot spot sections on the surface and provides a stable and substantially homogeneous temperature distribution across the entire surface being heated.

The apparatus may further comprise a position calibrator 319. The position calibrator 319 is to enable matching of each temperature reading with each zone. In an example, the position calibrator 319 is provided with data indicating the size and position (which is fixed) of the processing bed 301. Each sensor can then be positioned relative to the edges of the processing bed 301. The agent delivery controller 309 controls delivery of the agent(s) relative to the boundaries of the processing bed 301. Therefore the position at which each temperature reading is taken can be easily correlated to the position of the pattern, the processing bed 301 and hence the location of each zone. In addition the pattern may be formed with alignment traces which can be used by the position calibrator to calibrate the apparatus such that the position at which each temperature reading is taken is correlated to the zone at which that temperature reading was actually taken. The output of the position calibrator 319 is provided to the temperature controller 313 to match the temperature readings with each zone and hence increase the accuracy of the modulation of the temperature readings and hence increase accuracy of control of energy delivered to each zone.

Temperature stability during the process is improved. Optimized energy consumption with reduction of surface over-heating is achieved. A stable temperature is provided that favours parts quality and mechanical properties. Issues like non-homogeneous melting/curing and non-homogeneous material spreading can be detected.

It should be noted that the above-mentioned examples illustrate rather than limit what is described herein, and that those skilled in the art will be able to design many alternative implementations without departing from the scope of the appended claims. The word "comprising" does not exclude the presence of elements other than those listed in a claim, "a" or "an" does not exclude a plurality, and a single processor or other unit may fulfil the functions of several units recited in the claims.

## Claims

1. A method of controlling heating of a surface of a layer of build material in additive manufacturing of an object on a layer-by-layer basis, the method comprising:
(a) monitoring the temperature of a plurality of zones of the surface (303) of the layer of build material to output at least one temperature reading of each of the plurality of zones (401);
(b) modulating the temperature readings in response to a pattern arranged across a portion of the plurality of zones (401), the pattern being indicative of a selective delivery of at least one agent to define at least one slice of the object being generated, wherein the pattern is the pattern of the layer and/or the pattern of at least one previously deposited layer;
(c) controlling the energy delivered to each of the plurality of zones (401) based on the modulated temperature readings to maintain a substantially homogeneous temperature distribution across the surface
(d) selectively delivering an agent onto portions of the surface in accordance with the pattern of the layer.

2. The method of claim 1, wherein the pattern is provided in the form of data which represents a predefined pattern and the method further comprises
receiving data representing the predefined pattern; and wherein step (b) comprises
modulating the temperature readings in response to the received data.

3. The method of claim 1, wherein the method further comprises
determining the percentage area occupied by the pattern within each of the plurality of zones (401); and
wherein step (b) comprises
modulating the temperature readings of each one of the plurality of zones (401) based on the determined percentage area of the corresponding one of the plurality of zones (401).

4. The method of claim 1, wherein the method further comprises
depositing a plurality of layers of a build material, each layer of the build material defining the surface; and
repeating steps (a) to (c) for each deposited layer.

5. The method of claim 1, wherein selectively delivering an agent comprises
selectively delivering a coalescing agent onto portions of the build material to form at least a part of the pattern across the plurality of zones (401); and
wherein step (c) further comprises
controlling the energy delivered to each of the plurality of zones (401) so that when the energy is applied the layer of build material coalesces and solidifies to form a slice of a 3-D object in accordance with the pattern.

6. The method of claim 1, wherein selectively delivering an agent comprises
selectively delivering a coalescing modifier agent onto portions of the build material to form at least part of the pattern across the plurality of zones; and
wherein step (c) further comprises
controlling the energy delivered to each of the plurality of zones so that when the energy is applied the layer of build material modifies the properties of portions of the build material in forming a slice of a 3-D object in accordance with the pattern.

7. Apparatus (300) for controlling heating of a surface of a layer of build material in additive manufacturing of an object on a layer-by-layer basis, comprising:
at least one sensor (307) to monitor the temperature of a plurality of zones (401) of a surface (303) of the layer of build material to output at least one temperature reading for each of the plurality of zones (401);
a receiver (315) to receive data representing a predefined pattern to be formed across a portion of the plurality of zones and/or data representing a pattern already formed across a portion of the plurality of zones, wherein the pattern is the pattern of the currently deposited layer and/or the pattern of at least one previously deposited layer, the pattern being indicative of a selective delivery of an agent to define at least one slice of an object;
an energy source (305) to heat the surface (303);
a temperature controller (313) to modulate the temperature readings in response to the pattern arranged across a portion of the plurality of zones (401), and to control the energy delivered to each of the plurality of zones (401) by the energy source (305) based on the modulated temperature readings to maintain a substantially homogeneous temperature distribution across the surface (303); and
an agent delivery controller (309) to selectively deliver an agent onto portions of the surface (303) in accordance with the pattern of the currently deposited layer.

8. Apparatus of claim 7, wherein the apparatus (300) further comprises a position calibrator (319) to calibrate the position of the at least one sensor relative to the position of the pattern and/or the location of each of the plurality of zones (401).

9. Apparatus of claim 7, wherein the apparatus (300) further comprises
a build material distributor (311) to deposit a plurality of layers of a build material to generate a 3-D object therefrom;
wherein the at least one sensor (307) is to monitor the temperature of a plurality of zones (401) of a surface (303) of each deposited layer to output at least one temperature reading for each of the plurality of zones; and
wherein the agent delivery controller (309) is to control selective delivery of an agent onto portions of the surface (303) of each deposited layer to form a pattern across the plurality of zones and wherein the temperature controller (313) is to modulate the temperature readings of each deposited layer in response to the pattern of agent formed across the plurality of zones of a currently deposited layer and/or at least one previously deposited layer and to control the energy delivered to each of the plurality of zones of the currently deposited layer based on the modulated temperature readings for the currently deposited layer.

10. Apparatus according to claim 9, wherein the apparatus (300) further comprises
a coalescing agent distributor to selectively deliver a coalescing agent onto a first set of portions of the build material to form at least a part of the pattern; and
a coalescence modifier agent distributor to selectively deliver a coalescence modifier agent onto a second set of portions of the build material to form at least part of the pattern.

## Patentansprüche

1. Verfahren zum Steuern einer Erwärmung einer Oberfläche einer Schicht von Baumaterial bei einer additiven Fertigung eines Objekts auf einer schichtweisen Basis, wobei das Verfahren Folgendes umfasst:
(a) Überwachen der Temperatur von einer Vielzahl von Zonen der Oberfläche (303) der Schicht von Baumaterial, um mindestens eine Temperaturablesung von jeder der Vielzahl von Zonen (401) auszugeben;
(b) Modulieren der Temperaturablesungen als Reaktion auf ein Muster, das über einen Abschnitt der Vielzahl von Zonen (401) hinweg angeordnet ist, wobei das Muster bezeichnend für eine selektive Abgabe von mindestens einem Agenten ist, um mindestens eine Scheibe des Objekts, das erzeugt wird, zu definieren, wobei das Muster das Muster der Schicht und/oder das Muster von mindestens einer zuvor abgeschiedenen Schicht ist;
(c) Steuern der Energie, die an jede der Vielzahl von Zonen (401) abgegeben wird, auf der Basis der modulierten Temperaturablesungen, um eine im Wesentlichen homogene Temperaturverteilung über die Oberfläche hinweg aufrechtzuerhalten
(d) selektives Abgeben eines Agenten auf Abschnitte der Oberfläche gemäß dem Muster der Schicht.

2. Verfahren nach Anspruch 1, wobei das Muster in der Form von Daten bereitgestellt wird, die einem vordefiniertes Muster entsprechen, und das Verfahren ferner Folgendes umfasst:
Empfangen von Daten, die das vordefinierte Muster darstellen; und wobei Schritt (b) Folgendes umfasst:
Modulieren der Temperaturablesungen als Reaktion auf die empfangenen Daten.

3. Verfahren nach Anspruch 1, wobei das Verfahren ferner Folgendes umfasst:
Bestimmen des Prozentbereichs, der durch das Muster innerhalb jeder der Vielzahl von Zonen (401) belegt ist; und
wobei Schritt (b) Folgendes umfasst:
Modulieren der Temperaturablesungen jeder der Vielzahl von Zonen (401) auf der Basis des bestimmten Prozentbereichs der entsprechenden einen der Vielzahl von Zonen (401).

4. Verfahren nach Anspruch 1, wobei das Verfahren ferner Folgendes umfasst:
Abscheiden einer Vielzahl von Schichten von Baumaterial, wobei jede Schicht des Baumaterials die Oberfläche definiert; und
Wiederholen der Schritte (a) bis (c) für jede abgeschiedene Schicht.

5. Verfahren nach Anspruch 1, wobei ein selektives Abgeben eines Agenten Folgendes umfasst:
selektives Abgeben eines Koaleszenzagenten auf Abschnitte des Baumaterials, um mindestens einen Teil des Musters über die Vielzahl von Zonen (401) hinweg auszubilden; und
wobei Schritt (c) ferner Folgendes umfasst:
Steuern der Energie, die an jede der Vielzahl von Zonen (401) abgegeben wird, sodass, wenn die Energie angelegt wird, die Schicht von Baumaterial koalesziert und verfestigt wird, um eine Scheibe eines 3-D-Objekts gemäß dem Muster auszubilden.

6. Verfahren nach Anspruch 1, wobei ein selektives Abgeben eines Agenten Folgendes umfasst:
selektives Abgeben eines Koaleszenzmodifikationsagenten auf Abschnitte des Baumaterials, um mindestens einen Teil des Musters über die Vielzahl von Zonen hinweg auszubilden; und
wobei Schritt (c) ferner Folgendes umfasst:
Steuern der Energie, die an jede der Vielzahl von Zonen abgegeben wird, sodass, wenn die Energie angelegt wird, die Schicht von Baumaterial die Eigenschaften von Abschnitten des Baumaterials beim Ausbilden einer Scheibe eines 3-D-Objekts gemäß dem Muster modifiziert.

7. Vorrichtung (300) zum Steuern eines Erwärmens einer Oberfläche einer Schicht von Baumaterial bei einer additiven Fertigung eines Objekts auf einer schichtweisen Basis, die Folgendes umfasst:
mindestens einen Sensor (307), um die Temperatur einer Vielzahl von Zonen (401) einer Oberfläche (303) der Schicht von Baumaterial zu überwachen, um mindestens eine Temperaturablesung für jede der Vielzahl von Zonen (401) auszugeben;
einen Empfänger (315), um Daten, die einem vordefinierten Muster entsprechen, das über einen Abschnitt der Vielzahl von Zonen hinweg auszubilden ist, und/oder Daten, die einem Muster entsprechen, das bereits über einen Abschnitt der Vielzahl von Zonen hinweg ausgebildet ist, zu empfangen, wobei das Muster das Muster der aktuell abgeschiedenen Schicht und/oder des Musters von mindestens einer zuvor abgeschiedenen Schicht ist, wobei das Muster bezeichnend für eine selektive Abgabe eines Agenten ist, um mindestens eine Scheibe eines Objekts zu definieren;
eine Energiequelle (305), um die Oberfläche (303) zu erwärmen;
einen Temperatur-Controller (313), um die Temperaturablesungen als Reaktion auf das Muster, das über einen Abschnitt der Vielzahl von Zonen (401) hinweg angeordnet ist, zu modulieren, und um die Energie, die an jede der Vielzahl von Zonen (401) durch die Energiequelle (305) basierend auf den modulierten Temperaturablesungen abgegeben wird, zu steuern, um eine im Wesentlichen homogene Temperaturverteilung über die Oberfläche (303) hinweg aufrechtzuerhalten; und
einen Agentenabgabe-Controller (309), um einen Agenten auf Abschnitte der Oberfläche (303) gemäß dem Muster der aktuell abgeschiedenen Schicht selektiv abzugeben.

8. Vorrichtung nach Anspruch 7, wobei die Vorrichtung (300) ferner einen Positionskalibrator (319) umfasst, um die Position des mindestens einen Sensors relativ zu der Position des Musters und/oder dem Ort von jeder der Vielzahl von Zonen (401) zu kalibrieren.

9. Vorrichtung nach Anspruch 7, wobei die Vorrichtung ferner Folgendes umfasst:
einen Baumaterialverteiler (311), um eine Vielzahl von Schichten eines Baumaterials abzuscheiden, um daraus ein 3-D-Objekt zu erzeugen;
wobei der mindestens eine Sensor (307) dazu dient, die Temperatur einer Vielzahl von Zonen (401) einer Oberfläche (303) von jeder abgeschiedenen Schicht zu überwachen, um mindestens eine Temperaturablesung für jede der Vielzahl von Zonen auszugeben; und
wobei die Agentenabgabesteuerung (309) dazu dient, eine selektive Abgabe eines Agenten auf Abschnitte der Oberfläche (303) von jeder abgeschiedenen Schicht zu steuern, um ein Muster über die Vielzahl von Zonen hinweg auszubilden, und wobei der Temperatur-Controller (313) dazu dient, die Temperaturablesungen von jeder abgeschiedenen Schicht als Reaktion auf das Muster von Agenten, die über die Vielzahl von Zonen einer aktuell abgeschiedenen Schicht und/oder mindestens einer zuvor abgeschiedenen Schicht hinweg zu modulieren, und um die Energie, die an jede der Vielzahl von Zonen der aktuell abgeschiedenen Schicht abgegeben wird, auf der Basis der modulierten Temperaturablesungen für die aktuell abgeschiedene Schicht zu steuern.

10. Vorrichtung nach Anspruch 9, wobei die Vorrichtung (300) ferner umfasst:
einen Koaleszenzagentenverteiler, um einen Koaleszenzagenten auf einen ersten Satz von Abschnitten des Baumaterials selektiv abzugeben, um mindestens einen Teil des Musters auszubilden; und
einen Koaleszenzmodifikationsagentenverteiler, um einen Koaleszenzmodifikationsagenten auf einen zweiten Satz von Abschnitten des Baumaterials selektiv abzugeben, um mindestens einen Teil des Musters auszubilden.

## Revendications

1. Procédé permettant de réguler le chauffage d'une surface d'une couche de matériau de construction dans la fabrication additive d'un objet sur une base couche par couche, le procédé comprenant :
(a) la surveillance de la température d'une pluralité de zones de la surface (303) de la couche de matériau de construction pour sortir au moins un relevé de température de chaque zone de la pluralité de zones (401) ;
(b) la modulation des relevés de température en réponse à un motif agencé sur toute l'étendue d'une partie de la pluralité de zones (401), le motif révélant une distribution sélective d'au moins un agent pour définir au moins une tranche de l'objet en cours de génération, dans lequel le motif est le motif de la couche et/ou le motif d'au moins une couche précédemment déposée ;
(c) la régulation de l'énergie distribuée à chaque zone de la pluralité de zones (401) sur la base des relevés de température modulés pour maintenir une distribution de température sensiblement homogène sur toute l'étendue de la surface
(d) la distribution sélective d'un agent sur des parties de la surface selon le motif de la couche.

2. Procédé selon la revendication 1, dans lequel le motif est fourni sous la forme de données qui représentent un motif prédéfini et le procédé comprend en outre
la réception de données représentant le motif prédéfini ; et dans lequel l'étape (b) comprend ; et
la modulation des relevés de température en réponse aux données reçues.

3. Procédé selon la revendication 1, le procédé comprenant en outre
la détermination du pourcentage de zone occupé par le motif à l'intérieur de chaque zone de la pluralité de zones (401) ; et
dans lequel l'étape (b) comprend
la modulation des relevés de température de chaque zone de la pluralité de zones (401) sur la base du pourcentage de zone déterminé de la zone correspondante de la pluralité de zones (401).

4. Procédé selon la revendication 1, le procédé comprenant en outre
le dépôt d'une pluralité de couches d'un matériau de construction, chaque couche du matériau de construction définissant la surface ; et
la répétition des étapes (a) à (c) pour chaque couche déposée.

5. Procédé selon la revendication 1, dans lequel la distribution sélective d'un agent comprend
la distribution sélective d'un agent de coalescence sur des parties du matériau de construction pour former au moins une partie du motif sur toute l'étendue de la pluralité de zones (401) ; et
dans lequel l'étape (c) comprend en outre
la régulation de l'énergie distribuée à chaque zone de la pluralité de zones (401) de sorte que lorsque l'énergie est appliquée la couche de matériau de construction coalesce et se solidifie pour former une tranche d'un objet 3D selon le motif.

6. Procédé selon la revendication 1, dans lequel la distribution sélective d'un agent comprend
la distribution sélective d'un agent modificateur de coalescence sur des parties du matériau de construction pour former au moins une partie du motif sur toute l'étendue de la pluralité de zones ; et
dans lequel l'étape (c) comprend en outre
la régulation de l'énergie distribuée à chaque zone de la pluralité de zones de sorte que lorsque l'énergie est appliquée la couche de matériau de construction modifie les propriétés de parties du matériau de construction dans la formation d'une tranche d'un objet 3D conformément au motif.

7. Appareil (300) permettant de réguler le chauffage d'une surface d'une couche de matériau de construction dans la fabrication additive d'un objet sur une base couche par couche, comprenant :
au moins un capteur (307) destiné à surveiller la température d'une pluralité de zones (401) d'une surface (303) de la couche de matériau de construction pour sortir au moins un relevé de température pour chaque zone de la pluralité de zones (401) ;
un récepteur (315) destiné à recevoir des données représentant un motif prédéfini devant être formé sur toute l'étendue d'une partie de la pluralité de zones et/ou des données représentant un motif déjà formé sur toute l'étendue d'une partie de la pluralité de zones, dans lequel le motif est le motif de la couche actuellement déposée et/ou le motif d'au moins une couche précédemment déposée, le motif révélant une distribution sélective d'un agent pour définir au moins une tranche d'un objet ;
une source d'énergie (305) destinée à chauffer la surface (303) ;
un régulateur de température (313) destiné à moduler les relevés de température en réponse au motif agencé sur toute l'étendue d'une partie de la pluralité de zones (401), et pour réguler l'énergie distribuée à chaque zone de la pluralité de zones (401) par la source d'énergie (305) sur la base des relevés de température modulés pour maintenir une répartition de température sensiblement homogène sur toute l'étendue de la surface (303) ; et
un régulateur de distribution d'agent (309) pour distribuer sélectivement un agent sur des parties de la surface (303) selon le motif de la couche actuellement déposée.

8. Appareil selon la revendication 7, l'appareil (300) comprenant en outre un étalonneur de position (319) pour étalonner la position de l'au moins un capteur par rapport à la position du motif et/ou à l'emplacement de chaque zone de la pluralité de zones (401).

9. Appareil selon la revendication 7, l'appareil (300) comprenant en outre
un distributeur de matériau de construction (311) destiné à déposer une pluralité de couches d'un matériau de construction pour générer un objet 3D à partir de celles-ci ;
dans lequel l'au moins un capteur (307) est destiné à surveiller la température d'une pluralité de zones (401) d'une surface (303) de chaque couche déposée pour sortir au moins un relevé de température pour chaque zone de la pluralité de zones ; et
dans lequel le régulateur de distribution d'agent (309) est destiné à réguler la distribution sélective d'un agent sur des parties de la surface (303) de chaque couche déposée pour former un motif sur toute l'étendue de la pluralité de zones et dans lequel le régulateur de température (313) est destiné à moduler les relevés de température de chaque couche déposée en réponse au motif d'agent formé sur toute l'étendue de la pluralité de zones d'une couche actuellement déposée et/ou d'au moins une couche précédemment déposée et à réguler l'énergie distribuée à chaque zone de la pluralité de zones de la couche actuellement déposée sur la base des relevés de température modulés pour la couche actuellement déposée.

10. Appareil selon la revendication 9, l'appareil (300) comprenant en outre
un distributeur d'agent de coalescence destiné à distribuer sélectivement un agent de coalescence sur un premier ensemble de parties du matériau de construction pour former au moins une partie du motif ; et
un distributeur d'agent modificateur de coalescence destiné à distribuer sélectivement un agent modificateur de coalescence sur un second ensemble de parties du matériau de construction pour former au moins une partie du motif.
